# EUROPEAN PATENT SPECIFICATION

(11) **EP 3 375 408 B1**
(45) Date of publication and mention of the grant of the patent: **15.05.2019**
(21) Application number: 17160707.0
(22) Date of filing: 14.03.2017
(51) Int. Cl.: A61C 13/15

(54) **DENTAL LIGHT POLYMERIZATION DEVICE**
ZAHNÄRZTLICHE LICHTPOLYMERISIERUNGSVORRICHTUNG
DISPOSITIF DE POLYMÉRISATION DE LUMIÈRE DENTAIRE

(43) Date of publication of application: 19.09.2018
(73) Proprietor: 3M Innovative Properties Company, Saint Paul, MN 55133-3427 (US)
(72) Inventor: Schmid, Rudolf, 82223 Eichenau (DE); Gerlach, Korbinian, 82131 Gauting (DE)
(74) Representative: Hohmann, Arno

(56) References cited:
- US-A- 6 089 740
- US-A1- 2005 035 685
- US-A1- 2011 300 505

## Description

### Field of the Invention

The invention relates to a dental light polymerization device. In particular the invention relates to a dental light polymerization device which has a piezoelectric transmitter and at least a piezoelectric first receiver for sensing a user input.

### Background Art

Light hardenable or light curable materials are widely used in dentistry for the restoration of teeth. Many of such materials are made to provide optical instructions that resemble those of natural teeth. Further such materials typically can be placed precisely and conveniently, can be hardened instantly, and the hardened material is typically relatively durable.

Light hardenable materials often include a polymerizable matrix material and filler materials including colorants, and may initially be generally soft or flowable so that they can be applied in a desired location and shape. For example, for restoration of a tooth the dental material may be filled into a tooth cavity and shaped so that the restored tooth resembles a natural tooth. Once the desired shape has been formed, the material may be cured by exposing it to light of a desired wavelength. The light typically activates photoinitiators in the dental material that cause the matrix material to polymerize.

The use of dental materials that are hardenable by blue light of a wavelength of between about 450 and 500 nm (nanometers) has become common in dentistry. Accordingly, light-emitting devices used for hardening such dental materials typically emit light at such wavelengths. Such a light-emitting device is for example available from 3M Deutschland GmbH, Germany, under the trade designation Elipar™ S10.

Typically dental light-emitting devices are provided with one or more buttons for controlling electric functions of the device, for example one or more push buttons for switching the device on and for selecting different modes of operation. On the other hand hygiene standards often require materials used for the light-emitting devices to be resistant against aggressive disinfectants and/or cleaning agents.

For example, US 2011/0300505 A1 discloses a dental polymerisation device with a conventional push button.

Therefore there is still a desire for a device that can be operated relatively easily but which at the same time provides a relatively high durability when exposed to disinfectants and/or cleaning agents.

### Summary of the Invention

The invention relates to a dental light polymerization device. The dental light polymerization device. The dental light polymerization device comprises a housing, a light source for emitting blue light, a piezoelectric transmitter and at least a piezoelectric first receiver. The transmitter is acoustically coupled with the housing for transmitting an acoustic wave into the housing and the first receiver is acoustically coupled to the housing for picking up the acoustic wave from the housing. The transmitter and the first receiver are arranged spaced from each other. A portion of the housing between the transmitter and the first receiver forms a first touch surface.

Although it is referred to "the" acoustic wave herein the acoustic wave can vary, for example in its amplitude and/or frequency, between the transmitter and the at least first receiver.

For the purpose of the present specification the term "blue light" refers to light having a wavelength within the range of about 430 nm to 500 nm, preferably within a range of about 430 nm to 480 nm. Blue light preferably predominantly consists of light within a range of about 430 nm to 480 nm. The blue light may particularly not comprise light having a wavelength outside the range of about 430 nm to 480 nm at a substantial intensity or at all. In particular, blue light may have a first portion of light within a range of about 430 nm to 480 nm and preferably does not have a significant second light portion within a range of 570 nm and 590 nm, wherein the maximum intensity of the second portion of light is preferably less than 10% and more preferably less than 1% of the maximum intensity of the first portion of light. Further blue light may not have a significant third light portion within the spectrum of visible light outside the range of 430 nm and 480 nm and outside the range of 570 nm to 590 nm, wherein the maximum intensity of any third portion of light is preferably less than 25% and more preferably less than 20% of the maximum intensity of the first portion of light.

In one embodiment the dental light polymerization device comprises at least a piezoelectric second receiver. The second receiver is preferably acoustically coupled to the housing for picking up the acoustic wave from the housing. The transmitter and the second receiver are preferably arranged spaced from each other. A further portion of the housing between the transmitter and the second receiver preferably forms a second touch surface. Further receivers forming further touch surfaces may be present in the dental light polymerization device.

In one embodiment the transmitter and the first receiver are arranged within the housing. Preferably, the transmitter and the first receiver are encapsulated, preferably hermetically encapsulated within the housing. Further, the transmitter and the first and second receiver are preferably arranged within the housing, preferably hermetically encapsulated within the housing. Preferably, the transmitter is arranged between the first and second receiver. Further, the transmitter and the first receiver are preferably spaced from each other at the same distance as the transmitter and the second receiver. Thus, a detection of a user's finger on the first and second touch surface can be performed in the same way for each of the first and second touch surface.

In one embodiment the transmitter and the first and second receiver each comprise a piezoelectric element that is mechanically coupled to the housing. The piezoelectric element may be in direct mechanical contact or may be bonded or otherwise mechanically attached to the housing. Thus, oscillations can be transferred between the transmitter and the housing and between the housing and the first and second receiver.

In an embodiment the dental light polymerization device further comprises an electrical control circuit. The electrical control circuit is (electrically) connected or (electrically) connectable to the transmitter and the first receiver. The control unit preferably comprises a signal generator. Further, the control unit is preferably configured to operate the transmitter based on an excitation signal provided by the signal generator for generating the acoustic wave. In particular, the piezo element of the transmitter may be powered by a voltage that carries or forms the excitation signal provided by the signal generator. The control unit is further configured to receive a first and second response signal from the first and second receiver, respectively, based on the acoustic wave picked up by the first and/or second receiver, respectively. In particular, the piezo element of each of the first and second receiver may generate a voltage in response to the acoustic wave that excites the respective piezo element. The control unit is further preferably configured to determine a difference between the excitation signal and the first response signal. The control unit may further be configured to determine a difference between the excitation signal and the second response signal. Based on the difference between the excitation signal and the first response signal, the control unit is preferably configured to provide a first control signal that is representative of a presence or absence of a user's finger on the first touch surface. Furthermore, based on the difference between the excitation signal and the second response signal, the control unit is preferably configured to provide a second control signal that is representative of a presence or absence of a user's finger on the second touch surface. The first control signal may be used to activate the dental light polymerization device in a polymerization function. In the polymerization function the light source is activated for a pre-determined or pre-selected time period before the light source is automatically deactivated. The second control signal may be used to preselect the time period for which the dental light polymerization device operates in the polymerization function. Preferably, each second control signal causes the pre-selected time period to switch consecutively from 5 seconds, 10 seconds, 15 seconds, 20 seconds, 120 seconds. After 120 seconds the time period starts over from 5 seconds. Other time periods may be provided as appropriate.

In one embodiment the difference between the excitation and the first response signal comprises a difference between an excitation amplitude of the excitation signal and a first response amplitude of the first response signal. Further, the difference between the excitation and the second response signal may comprises a difference between an excitation amplitude of the excitation signal and a second response amplitude of the second response signal. A lower first or second response amplitude than the excitation amplitude is indicative of a presence of a user's finger on the first or second touch surface, respectively.

In one embodiment the housing forms a grip portion of the dental light polymerization device. Further, the dental light polymerization device preferably has a tip portion protruding from the grip portion. The tip portion at a free end preferably forms a light output from which light generated by the light source is emitted when the light source is activated. The tip portion may comprise the light source, for example a high power LED (Light Emitting Diode) or a laser diode.

In a further embodiment the dental light polymerization device further comprises a rechargeable battery that is encapsulated within the housing.

Preferably the dental light polymerization device has no movable actuator, in particular no switch or button, for operating the dental light polymerization device, in particular for operating the electric functions of the dental light polymerization device.

In an embodiment in the dental light polymerization device is provided an indicator function that acknowledges a recognition of a user's finger on the housing. The indicator function may comprise at least one of an audible, optical and tactile signal. Accordingly, the dental light polymerization device may comprise at least one of a loudspeaker, beeper, indicator lamp or indicator screen or a vibration unit.

In one embodiment at least part of the housing is light transmissive. The dental light polymerization device may further have an illumination device arranged in the housing. The illumination device may be configured to illuminate the first and/or second touch surface from behind the first and/or second touch surface, respectively.

### Brief Description of the Figures

- Fig. 1: is a perspective view of a dental light polymerization device according to an embodiment of the invention;
- Fig. 2: is a cross-sectional view of the dental light polymerization device shown in Fig. 1;
- Fig. 3: is a schematic view illustrating certain components of the device shown in Fig. 1;
- Fig. 4: is a block diagram illustrating an exemplary electronic circuit as it may be used with a dental light polymerization device according to an embodiment of the invention; and
- Fig. 5: is a diagram illustrating an excitation and corresponding response signal as measurable in a dental light polymerization device according to an embodiment of the invention.

### Detailed Description of the Invention

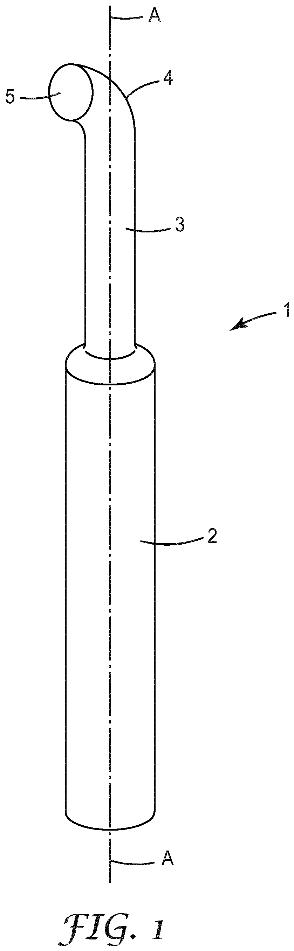

Fig. 1 shows a dental light polymerization device 1. The dental light polymerization device 1 has a housing 2 that forms a grip portion for manually handling of the dental light polymerization device 1. The dental light polymerization device 1 further has a tip portion 3 for intra-oral use. The tip portion 3 is an elongated structure a free end 4 of which forms a light output 5. In the example, a light source (not visible) for emitting blue light is arranged within the free end 4 of the dental light polymerization device 1. However, in another example the light source may be arranged within the housing and the tip portion may be a light guide, for example one that has a plurality of parallel extending glass fibers. The light source in the example is a high power LED (Light Emitting Diode), but may in another example comprise any other type of light source, for example a Laser.

The dental light polymerization device 1 in the example is an overall wireless device, but may in another example be wired. In the example the dental light polymerization device 1 has a rechargeable battery (not visible). For charging the battery a charging device may be provided (not shown) by which the battery can be charged. For charging the battery the dental light polymerization device 1 may be connected to the charging device in a contactless manner or by electrical contact-based connection.

The dental light polymerization device 1 on its outside is free of any movable switch, button or other movable means for operating the electric functions of the dental light polymerization device 1. Preferably, the dental light polymerization device 1 has no movable parts other than the tip portion 3 and the housing 2 which are rotatable against each other about a longitudinal axis A of the dental light polymerization device 1 and which are removably attachable to each other. Thus, the housing 2 can be largely provided by a contiguous portion of material. Therefore, the reliability of any sealing of the housing can be minimized. Further, the housing 2 can be provided in the form of a smooth surface with no or a minimized number of surface variations so that cleaning (and or disinfection) can be facilitated.

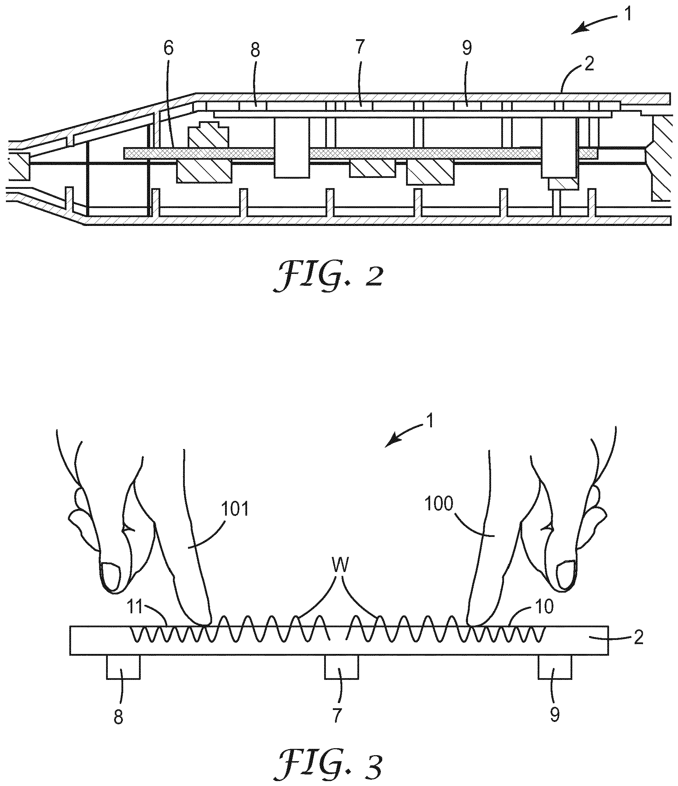

Fig. 2 shows a cross-section of the housing 2 of the dental light polymerization device 1. The dental light polymerization device 1 has an electrical control circuit 6 for controlling any functions of the dental light polymerization device 1. Basically the dental light polymerization device 1 can be operated in the following functions: The dental light polymerization device 1 has a light polymerization function in which the light source is activated for emitting light. The electrical control unit 6 provides a timer function that allows the operation of the light polymerization function at different pre-selectable time periods. Accordingly, the dental light polymerization device 1 is configured such that the activation of the light source is automatically sustained for the pre-selected time period after which the light source automatically deactivates. Further, the dental light polymerization device 1 has a timer selection function by which the time period of the light polymerization function can be pre-selected. In the example, the time periods can be pre-selected between 5 seconds, 10 seconds, 15 seconds 20 seconds and 120 seconds.

For operation of the electric functions the dental light polymerization device 1 has a piezoelectric transmitter 7, a piezoelectric first receiver 8 and a piezoelectric second receiver 9. The transmitter 7 as well as the first and second receiver 8, 9 are each acoustically coupled with the housing 2. In particular, the transmitter 7 is in mechanical contact with the housing 2 such that an acoustic wave generated by the transmitter 7 is mechanically transmitted into the housing 2. The transmitter 7 in the example further is electrically connected to the control unit 6. The control unit 6 comprises a signal generator and is configured to operate the transmitter based on an excitation signal provided by the signal generator. In particular, the control unit 6 has electronic circuitry that powers the piezo element of the transmitter 7 based on the excitation signal by a pulsed voltage or alternating voltage of a pre-determined peak-to-peak value. The first and second receiver 8, 9 each are in mechanical contact with the housing 2 such that the acoustic wave induced into the housing 2 by the transmitter 7 propagate through the housing 2 and to the first and second receiver 8, 9. The first and second receiver 8, 9 further are each electrically connected to the control unit 6. The control unit 6 comprises electronic circuitry for receiving and evaluating a response signal generated by the piezo elements of the first and second receiver 8, 9 in response to the acoustic wave to which the first and second receiver are exposed. In particular, the response signal generated by the piezo elements corresponds to a pulsed voltage or alternating voltage. Naturally the acoustic wave changes between the transmitter and the respective first or second receiver 8, 9 (due to absorption, for example) so that the excitation signal and the response signal typically at least slightly deviate. However, typically the peak-to-peak voltage of the response signal is in a fixed relationship relative to the excitation signal if the housing 2 is not in contact with other objects, for example is the housing 2 is not touched by a user. The electronic circuitry 6 is configured for determining a difference between the excitation signal and the response signal. Further, based on the determination of a difference of a sufficient significance the electronic circuitry 6 is configured for providing a control signal that is used to activate a function of the dental light polymerization device 1, as described by help of Fig. 3.

Fig. 3 illustrates a portion of the housing 2 of the dental light polymerization device 1 with the transmitter 7 and the first and second receiver 8, 9. The transmitter 7 and first receiver 8 are spaced from each other and a portion of the housing 2 between the transmitter 7 and the first receiver 8 forms a first touch surface 10. The transmitter 7 and second receiver 9 are spaced from each other and a portion of the housing 2 between the transmitter 7 and the second receiver 9 forms a second touch surface 11. The transmitter 7 induces an acoustic wave W into the housing 2. The acoustic wave W propagates through the housing 2 and in particular through the portions of the housing 2 that form the first and second touch surface 10, 11. As indicated in the Figure the wave W induced into the housing has a certain initial amplitude. A user's finger 100, 101 touching the first and second touch surface 10, 11, respectively, however causes the wave W to change, in particular to reduce its amplitude. That reduced amplitude can be recognized by the electronic circuitry (Fig. 2) and interpreted as a user input. The electronic circuitry is preferably set up to recognize a reduced amplitude as user input only if it is significant enough, in particular if the difference between the excitation signal and the response signal exceeds a predefined threshold value. Thus, the dental light polymerization device 1 is configured to accept a certain tolerance in which the difference between the excitation signal and the response signal may change without recognizing that difference as a user input. This helps preventing inadvertent activation of any function of the dental light polymerization device 1, for example due to moisture from cleaning or disinfection being disposed on the housing 2.

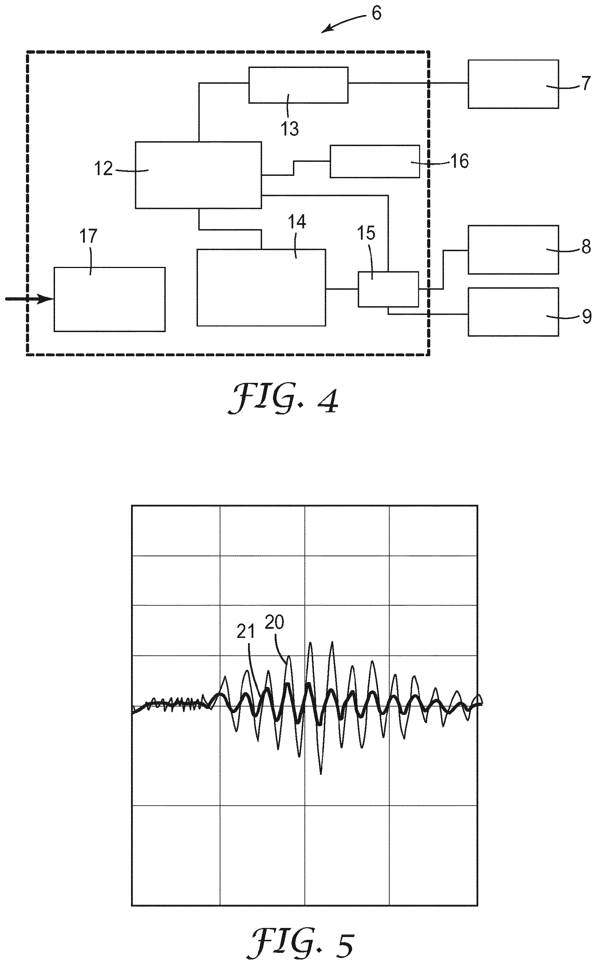

Fig. 4 shows an exemplary block diagram of an electronic circuitry 6. The electronic circuitry 6 has a microcontroller 12 for controlling the functions of the dental light polymerization device 1. The microcontroller 12 is electrically connected to the signal generator 13 that is electrically connected to the transmitter 7. The signal general 13 provides the excitation signal for powering the transmitter 7. Further, the microcontroller 12 is electrically connected to a signal evaluation unit 14 that is electrically to both, the first and second receiver 8, 9. A multiplexer 15 is arranged within the electrical connection between the signal evaluation unit 14 and the first and second receiver 8, 9. The multiplexer 15 is further electrically connected with the microcontroller. The signal evaluation unit 14 is configured to perform the determination of the difference between the excitation signal and the response signal received from the first and second receiver 8, 9. An indicator 16 (for example an indicator lamp) is electrically connected to the microcontroller, for example for indication a mode of operation and/or for acknowledging the recognition of a user input. Further, the electronic circuit has a power unit 17 that is configured to power the electronic circuit 6 and which is connected to the battery (not shown) of the dental light polymerization device.

Fig. 5 illustrates a diagram showing an excitation signal 20 relative to a response signal 21 measured between the transmitter and one of the first and second receiver in a situation in which a user touches the first or second touch surface, respectively. While in absence of a user's finger the response signal substantially corresponds to the excitation signal in the situation shown the response signal 21 significantly differs from the excitation signal 20. In particular the maximum of the peak-to-peak value of the excitation signal 20 is about 2.72 Volts and the maximum of the peak-to-peak value of the response signal 21 is about 1.02 Volts. Accordingly the difference between the peak-to-peak value of the excitation and the response signal is about 1.7 Volts (response signal is about 38% of the excitation signal). Thus, the difference is significant and clearly measurable. Further, it has been found that the presence of water droplets results in a (peak-to-peak) response signal that is about between 88% and 104% of the (peak-to-peak) excitation signal. Hence, even accounting for the presence of water droplets (for example from cleaning of the dental light polymerization device) a user input can be clearly recognized by the dental light polymerization device of the invention.

## Claims

1. A dental light polymerization device (1), comprising a housing (2), a light source for emitting blue light, a piezoelectric transmitter (7) and at least a piezoelectric first receiver (8), wherein the transmitter is acoustically coupled with the housing for transmitting an acoustic wave into the housing and the first receiver is acoustically coupled to the housing for picking up the acoustic wave from the housing, and wherein the transmitter and the first receiver are arranged spaced from each other and wherein a portion of the housing between the transmitter and the first receiver forms a first touch surface.

2. The dental light polymerization device of claim 1, wherein the transmitter and the first receiver are arranged within the housing.

3. The dental light polymerization device of claim 1 or 2, wherein the transmitter and the first receiver each comprise a piezoelectric element that is mechanically coupled to the housing.

4. The dental light polymerization device of any of the preceding claims, further comprising an electrical control circuit (6) connected or connectable to the transmitter and the first receiver, the control unit comprising a signal generator and being configured to operate the transmitter based on an excitation signal provided by the signal generator for generating the acoustic wave, wherein the control unit is further configured to receive a first response signal from the first receiver based on the acoustic wave picked up by the first receiver.

5. The dental light polymerization device of claim 4, wherein the control unit is further configured to determine a difference between the excitation signal and the first response signal and, based thereon, to provide a first control signal that is representative of a presence or absence of a user's finger on the first touch surface.

6. The dental light polymerization device of claim 5, wherein the difference between the excitation and first response signal comprises a difference between an excitation amplitude of the excitation signal and a first response amplitude of the first response signal.

7. The dental light polymerization device of claim 6, wherein a lower first response amplitude than the excitation amplitude is indicative of a presence of a user's finger on the first touch surface.

8. The dental light polymerization device of any of the preceding claims, comprising at least a piezoelectric second receiver (9), wherein the second receiver is acoustically coupled to the housing for picking up the acoustic wave from the housing, and wherein the transmitter and the second receiver are arranged spaced from each other and wherein a further portion of the housing between the transmitter and the second receiver forms a second touch surface.

9. The dental light polymerization device of any of the preceding claims, wherein the housing forming a grip portion of the dental light polymerization device, and wherein the dental light polymerization device further having a tip portion protruding from the grip portion, the tip portion at a free end forming a light output from which light generated by the light source is emitted when the light source is activated.

10. The dental light polymerization device of any of the preceding claims, further comprising a rechargeable battery that is encapsulated within the housing.

11. The dental light polymerization device of any of the preceding claims, having no movable actuator, in particular no switch or button, for operating the dental light polymerization device.

12. The dental light polymerization device of any of the preceding claims, in which it is provided an indicator function that acknowledges a recognition of a user's finger on the housing.

13. The dental light polymerization device of claim 12, wherein the indicator function comprises at least one of an audible, optical and tactile signal.

14. The dental light polymerization device of any of the preceding claims, wherein at least part of the housing is light transmissive, the dental light polymerization device further having an illumination device arranged in the housing.

## Patentansprüche

1. Dentale Lichtpolymerisationsvorrichtung (1), umfassend ein Gehäuse (2), eine Lichtquelle zum Emittieren von blauem Licht, einen piezoelektrischen Sender (7) und mindestens einen piezoelektrischen ersten Empfänger (8), wobei der Sender akustisch mit dem Gehäuse zum Senden einer akustischen Welle in dem Gehäuse und der erste Empfänger akustisch mit dem Gehäuse zum Aufnehmen der akustischen Welle aus dem Gehäuse gekoppelt ist, und wobei der Sender und der erste Empfänger voneinander beabstandet angeordnet sind, und wobei ein Abschnitt des Gehäuses zwischen dem Sender und dem ersten Empfänger eine erste berührungsempfindliche Oberfläche bildet.

2. Dentale Lichtpolymerisationsvorrichtung nach Anspruch 1, wobei der Sender und der erste Empfänger innerhalb des Gehäuses angeordnet sind.

3. Dentale Lichtpolymerisationsvorrichtung nach Anspruch 1 oder 2, wobei der Sender und der erste Empfänger jeweils ein piezoelektrisches Element umfassen, das mechanisch mit dem Gehäuse gekoppelt ist.

4. Dentale Lichtpolymerisationsvorrichtung nach einem der vorstehenden Ansprüche, die ferner eine elektrische Steuerschaltung (6) umfasst, die mit dem Sender und dem ersten Empfänger verbunden oder verbindbar ist, wobei die Steuereinheit einen Signalgenerator umfasst und konfiguriert ist, um den Sender basierend auf einem Anregungssignal zu betreiben, das von dem Signalgenerator zum Erzeugen der akustischen Welle bereitgestellt wird, wobei die Steuereinheit ferner konfiguriert ist, um ein erstes Antwortsignal von dem ersten Empfänger basierend auf der akustischen Welle, die von dem ersten Empfänger aufgenommen wurde, zu empfangen.

5. Dentale Lichtpolymerisationsvorrichtung nach Anspruch 4, wobei die Steuereinheit ferner konfiguriert ist, um eine Differenz zwischen dem Anregungssignal und dem ersten Antwortsignal zu bestimmen und basierend darauf ein erstes Steuersignal bereitzustellen, das für das Vorhandensein oder Fehlen eines Fingers eines Benutzers auf der ersten Berührungsoberfläche repräsentativ ist.

6. Dentale Lichtpolymerisationsvorrichtung nach Anspruch 5, wobei die Differenz zwischen der Anregung und dem ersten Antwortsignal eine Differenz zwischen einer Anregungsamplitude des Anregungssignals und einer ersten Antwortamplitude des ersten Antwortsignals umfasst.

7. Dentale Lichtpolymerisationsvorrichtung nach Anspruch 6, wobei eine erste Antwortamplitude, die niedrigere ist als die Anregungsamplitude, ein Vorhandensein eines Fingers eines Benutzers auf der ersten Berührungsoberfläche anzeigt.

8. Dentale Lichtpolymerisationsvorrichtung nach einem der vorstehenden Ansprüche, umfassend mindestens einen piezoelektrischen zweiten Empfänger (9), wobei der zweite Empfänger akustisch mit dem Gehäuse gekoppelt ist, um die akustische Welle aus dem Gehäuse aufzunehmen, und wobei der Sender und der zweite Empfänger voneinander beabstandet angeordnet sind, und wobei ein weiterer Abschnitt des Gehäuses zwischen dem Sender und dem zweiten Empfänger eine zweite Berührungsoberfläche bildet.

9. Dentale Lichtpolymerisationsvorrichtung nach einem der vorstehenden Ansprüche, wobei das Gehäuse einen Griffabschnitt der dentalen Lichtpolymerisationsvorrichtung bildet, und wobei die dentale Lichtpolymerisationsvorrichtung ferner einen Spitzenabschnitt aufweist, der von dem Griffabschnitt vorsteht, wobei der Spitzenabschnitt an einem freien Ende einen Lichtausgang bildet, aus dem durch die Lichtquelle erzeugtes Licht emittiert wird, wenn die Lichtquelle aktiviert wird.

10. Dentale Lichtpolymerisationsvorrichtung nach einem der vorstehenden Ansprüche, ferner umfassend eine wiederaufladbare Batterie, die in dem Gehäuse eingekapselt ist.

11. Dentale Lichtpolymerisationsvorrichtung nach einem der vorstehenden Ansprüche, die keinen beweglichen Aktuator, insbesondere keinen Schalter oder Knopf, zum Betreiben der dentalen Lichtpolymerisationsvorrichtung aufweist.

12. Dentale Lichtpolymerisationsvorrichtung nach einem der vorstehenden Ansprüche, bei der eine Indikatorfunktion vorgesehen ist, die eine Erkennung eines Fingers eines Benutzers auf dem Gehäuse bestätigt.

13. Dentale Lichtpolymerisationsvorrichtung nach Anspruch 12, wobei die Indikatorfunktion mindestens eines von einem hörbaren, optischen und taktilen Signal umfasst.

14. Dentale Lichtpolymerisationsvorrichtung nach einem der vorstehenden Ansprüche, wobei mindestens ein Abschnitt des Gehäuses lichtdurchlässig ist, wobei die dentale Lichtpolymerisationsvorrichtung ferner eine Beleuchtungsvorrichtung aufweist, die in dem Gehäuse angeordnet ist.

## Revendications

1. Dispositif de polymérisation lumineuse dentaire (1), comprenant un logement (2), une source de lumière pour émettre de la lumière bleue, un émetteur piézoélectrique (7) et au moins un premier récepteur piézoélectrique (8), dans lequel l'émetteur est acoustiquement couplé au logement pour transmettre une onde acoustique dans le logement et le premier récepteur est acoustiquement couplé au logement pour capter l'onde acoustique provenant du logement, et dans lequel l'émetteur et le premier récepteur sont agencés espacés l'un de l'autre et dans lequel une partie du logement entre l'émetteur et le premier récepteur forme une première surface tactile.

2. Dispositif de polymérisation lumineuse dentaire selon la revendication 1, dans lequel l'émetteur et le premier récepteur sont agencés au sein du logement.

3. Dispositif de polymérisation lumineuse dentaire selon la revendication 1 ou 2, dans lequel l'émetteur et le premier récepteur comprennent chacun un élément piézoélectrique qui est couplé mécaniquement au logement.

4. Dispositif de polymérisation lumineuse dentaire selon l'une quelconque des revendications précédentes, comprenant en outre un circuit de commande électrique (6) connecté ou pouvant être connecté à l'émetteur et au premier récepteur, l'unité de commande comprenant un générateur de signal et étant configurée pour faire fonctionner l'émetteur sur la base d'un signal d'excitation fourni par le générateur de signal pour générer l'onde acoustique, dans lequel l'unité de commande est en outre configurée pour recevoir un premier signal de réponse du premier récepteur sur la base de l'onde acoustique captée par le premier récepteur.

5. Dispositif de polymérisation lumineuse dentaire selon la revendication 4, dans lequel l'unité de commande est en outre configurée pour déterminer une différence entre le signal d'excitation et le premier signal de réponse et, sur la base de celle-ci, pour fournir un premier signal de commande qui est représentatif d'une présence ou d'une absence d'un doigt d'un utilisateur sur la première surface tactile.

6. Dispositif de polymérisation lumineuse dentaire selon la revendication 5, dans lequel la différence entre le signal d'excitation et le premier signal de réponse comprend une différence entre une amplitude d'excitation du signal d'excitation et une première amplitude de réponse du premier signal de réponse.

7. Dispositif de polymérisation lumineuse dentaire selon la revendication 6, dans lequel une première amplitude de réponse inférieure à l'amplitude d'excitation est indicative d'une présence d'un doigt d'un utilisateur sur la première surface tactile.

8. Dispositif de polymérisation lumineuse dentaire selon l'une quelconque des revendications précédentes, comprenant au moins un deuxième récepteur piézoélectrique (9), dans lequel le deuxième récepteur est couplé acoustiquement au logement pour capter l'onde acoustique provenant du logement, et dans lequel l'émetteur et le deuxième récepteur sont agencés espacés l'un de l'autre et dans lequel une partie supplémentaire du logement entre l'émetteur et le deuxième récepteur forme une deuxième surface tactile.

9. Dispositif de polymérisation lumineuse dentaire selon l'une quelconque des revendications précédentes, dans lequel le logement forme une partie de préhension du dispositif de polymérisation lumineuse dentaire, et dans lequel le dispositif de polymérisation lumineuse dentaire a en outre une partie d'embout dépassant de la partie de préhension, la partie d'embout à une extrémité libre formant une sortie de lumière de laquelle de la lumière générée par la source de lumière est émise lorsque la source de lumière est activée.

10. Dispositif de polymérisation lumineuse dentaire selon l'une quelconque des revendications précédentes, comprenant en outre une batterie rechargeable qui est encapsulée au sein du logement.

11. Dispositif de polymérisation lumineuse dentaire selon l'une quelconque des revendications précédentes, n'ayant aucun actionneur mobile, en particulier aucun commutateur ou bouton, pour faire fonctionner le dispositif de polymérisation lumineuse dentaire.

12. Dispositif de polymérisation lumineuse dentaire selon l'une quelconque des revendications précédentes, dans lequel on fournit une fonction d'indicateur qui confirme une reconnaissance d'un doigt d'un utilisateur sur le logement.

13. Dispositif de polymérisation lumineuse dentaire selon la revendication 12, dans lequel la fonction d'indicateur comprend au moins l'un parmi un signal sonore, optique et tactile.

14. Dispositif de polymérisation lumineuse dentaire selon l'une quelconque des revendications précédentes, dans lequel au moins une partie du logement laisse passer la lumière, le dispositif de polymérisation lumineuse dentaire ayant en outre un dispositif d'éclairage agencé dans le logement.
